# EUROPEAN PATENT SPECIFICATION

(11) **EP 4 450 807 B1**
(45) Date of publication and mention of the grant of the patent: **05.08.2026**
(21) Application number: 22894035.9
(22) Date of filing: 22.06.2022
(51) Int. Cl.: F03D 9/32, F03D 13/20, F03D 13/10, F03D 1/02, F03D 13/25

(54) **WIND POWER SYSTEM**
WINDKRAFTANLAGE
INSTALLATION ÉOLIENNE DE PRODUCTION ÉLECTRIQUE

(30) Priority: 19.11.2021 AZ 20210115
(43) Date of publication of application: 23.10.2024
(73) Proprietor: Jivishov, Vusal Faig oglu, Baku, AZ1073 (AZ)
(72) Inventor: Jivishov, Vusal Faig oglu, Baku, AZ1073 (AZ)
(74) Representative: Gramm, Lins & Partner Patent- und Rechtsanwälte PartGmbB
(86) International application number: PCT/AZ2022/000010
(87) International publication number: WO 2023/087081

(56) References cited:
- CN-A- 105 240 220
- CN-A- 113 511 307
- DE-U1- 202010 003 654
- ES-B1- 2 262 416
- GR-B- 1 003 313
- GR-B- 1 003 313
- JP-A- 2013 029 101
- US-A1- 2007 138 021
- US-B2- 8 884 458

## Description

The invention relates to wind power generation, and more particularly to systems for producing power at sea using floating vessels.

It is well known to generate electrical energy from wind energy using stationary systems consisting of wind generators installed on fixed vertical supports in various places, including at sea.

The disadvantage of such systems is low efficiency due to the fact that if in some period of time there will be no wind at the place of their installation, then the system will not work during this period.

A wind power system (prototype) is also known, containing a floating base in the form of a vessel, on the deck of which three wind generators are placed on vertical racks (see US patent 8,405,242 B2). In this case, the vertical racks are installed one after another along the deck of the vessel. This system is designed to generate energy in various parts of the sea where there is wind, store the generated energy in batteries and then move it to facilities, for example, located in ports, to power them with electricity via a cable thrown ashore.

The disadvantage of the known system is the low efficiency of its use when it is necessary to power electrical energy to coastal facilities, the approach to which is blocked by non-retractable bridges. This is due to the fact that the vertical racks of wind generators together with the blades have a sufficiently large height and it is not possible to pass under the bridge. The vessel is forced to stand far from the object and this leads to additional costs for laying power cables from the parking place of the vessel to the serviced object. In addition, in stormy weather, the high racks of wind generators with blades are subjected to a large load and can be damaged, which will lead to the failure of the entire system.

Other floating wind power systems are known from US 2007/138021 A1, US8 884 458 B2.

The objective of this invention is to create a system that allows increasing the efficiency of using floating wind power plants.

The problem of interest is solved in that a wind power system comprises a floating base in the form of a ship having on its deck three wind turbines on vertical posts, one of which is disposed on a fixed platform in the fore part of the deck, said ship additionally being provided with two rotating platforms, capable of moving in a horizontal plane, for receiving the other two wind turbines, wherein the rotating platforms are arranged symmetrically along the sides of the aft part of the ship one on the left and the other on the right, with one end of each rotating platform being hinged to the hull of the ship and the other end supporting the base of a wind turbine post, the posts of all three wind turbines being mounted so that they can be raised and lowered and being coupled to their respective platforms by hinged joints, wherein each post is provided with its own lowering and raising mechanism, and each rotating platform is provided with its own mechanism for movement in a horizontal plane.

Making the wind generator racks movable relative to the base with the possibility of lowering-lifting allows them to be transferred to the working position by lifting for generating electricity, as well as lowering them for preservation during a storm and for increasing maneuverability when passing under non-retractable bridges, and the presence of additional rotary platforms allows spreading the rear wind generators, which will increase the received electric power due to greater capture of the wind flow with its longitudinal movement along the vessel. All this increases the efficiency of using a floating wind power system.

The attached figures illustrate the proposed invention:

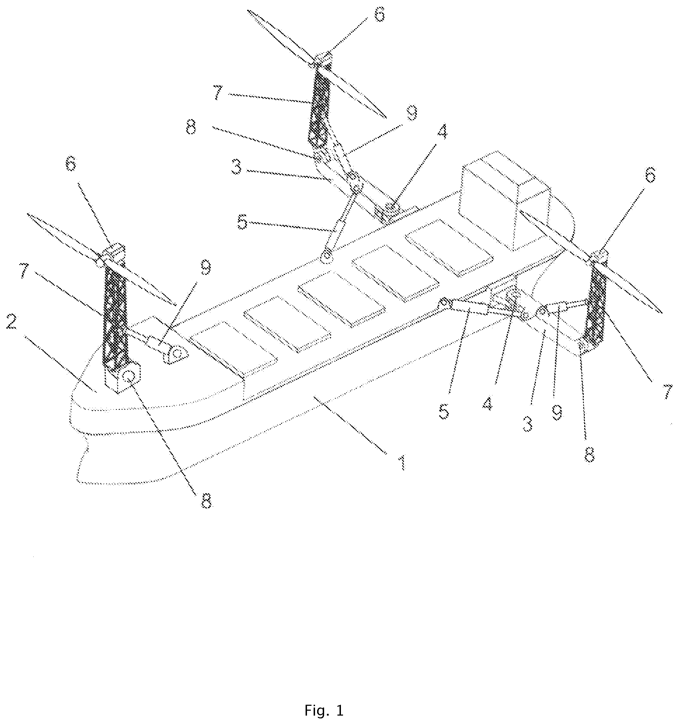

- Fig. 1 shows a general view of the claimed system with raised wind generators in the working position;

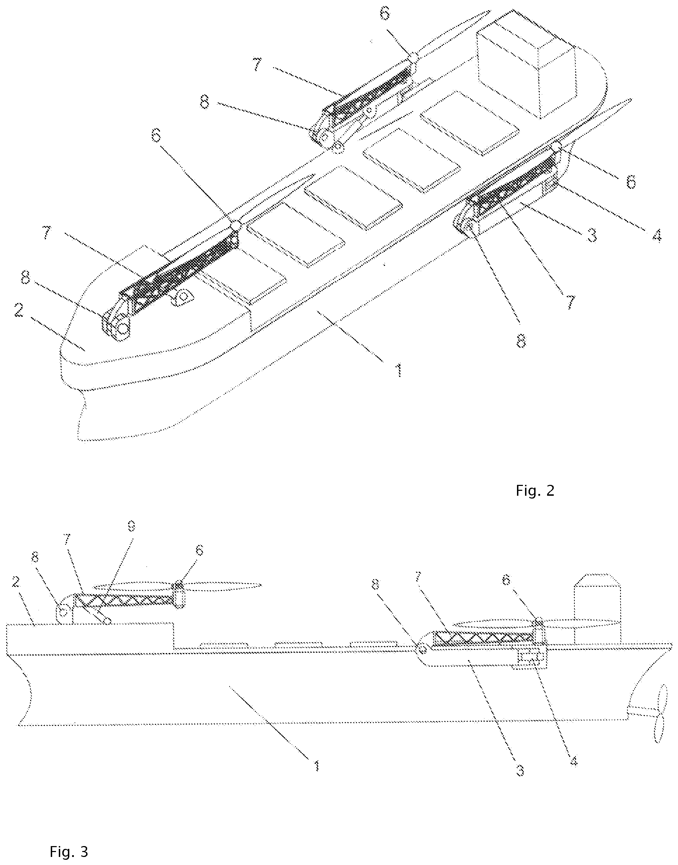

- Fig. 2 shows a general view of the claimed system with lowered wind generators in the non-working position;
- Fig. 3 shows a side view of the claimed system with lowered wind generators.

The attached figures show following:
- position 1 denotes the vessel;
- position 2 - fixed platform;
- position 3 - rotary platforms;
- position 4 - hinged elements connecting the rotary platform 3 with the vessel 1;
- position 5 - mechanism for moving the rotary platforms 3 in the horizontal plane;
- position 6 - wind generators;
- position 7 - wind generator racks;
- position 8 - hinged element connecting the base of the wind generator racks to the platforms;
- position 9 - lowering-lifting mechanisms of the wind generator rack.

The hinged elements 4 and 8 can be made in any known way, for example, in the form of axial hinges. The movement mechanisms 5 and the lowering-lifting mechanisms 9 can be made in any known way, for example, in the form of hydraulic drives.

The claimed system works as follows. When the vessel 1 goes to sea and finds a place with good wind activity, the system is transferred to the working position. To do this, first, the platforms 3 are spread using the mechanisms 5. Then, by means of the mechanisms 9, the racks 7 of the wind generators 6 are raised. The system is ready to convert wind energy into electrical energy and accumulate it.

In a storm or during movement, especially when passing under non-retractable bridges, the opposite actions are performed: by means of mechanisms 9, the racks 7 of wind generators 6 are lowered and platforms 3 are moved by means of mechanisms 5 to the folded position along the sides of the vessel 1.

The proposed wind energy system is novel, workable, industrially reproducible and provides a solution to the problem posed.

## Claims

1. A wind power system comprising
(a) a floating base in the form of a ship
(b) three wind turbines
(i) on the ship's deck
(ii) on vertical posts,
(c) wherein one wind turbine is disposed on a fixed platform in the fore part of the deck,
(d) the ship additionally being provided with two rotating platforms, capable of moving in a horizontal plane, for receiving the other two wind turbines,
(e) wherein the rotating platforms are arranged symmetrically along the sides of the aft part of the ship one on the left and the other on the right, with one end of each rotating platform being hinged to the hull of the ship and the other end supporting the base of a wind turbine post,
(f) the posts of all three wind turbines being mounted so that they can be raised and lowered and being coupled to their respective platforms by hinged joints,
(g) wherein each post is provided with its own lowering and raising mechanism, and each rotating platform is provided with its own mechanism for movement in a horizontal plane.

## Patentansprüche

1. Windkraftsystem, bestehend aus
(a) einer schwimmenden Basis in Form eines Schiffes
(b) drei Windturbinen
(i) auf dem Schiffsdeck
(ii) auf vertikalen Pfosten,
(c) wobei eine Windturbine auf einer festen Plattform im vorderen Teil des Decks angeordnet ist,
(d) wobei das Schiff zusätzlich mit zwei in einer horizontalen Ebene beweglichen Drehplattformen zur Aufnahme der beiden anderen Windturbinen ausgestattet ist,
(e) wobei die Drehplattformen symmetrisch entlang der Seiten des hinteren Teils des Schiffes angeordnet sind, eine auf der linken und die andere auf der rechten Seite, wobei ein Ende jeder Drehplattform am Schiffsrumpf angelenkt ist und das andere Ende die Basis eines Windturbinenpfostens trägt,
(f) wobei die Masten aller drei Windkraftanlagen so montiert sind, dass sie angehoben und abgesenkt werden können, und über Gelenkverbindungen mit ihren jeweiligen Plattformen gekoppelt sind,
(g) wobei jeder Mast mit einem eigenen Absenk- und Anhebe-Mechanismus versehen ist und jede Drehplattform mit einem eigenen Mechanismus zur Bewegung in einer horizontalen Ebene versehen ist.

## Revendications

1. Système d'énergie éolienne comprenant
(a) une base flottante sous la forme d'un navire
(b) trois éoliennes
(i) sur le pont du navire
(ii) sur des poteaux verticaux,
(c) dans lequel une éolienne est disposée sur une plate-forme fixe à l'avant du pont,
(d) le navire étant en outre muni de deux plates-formes rotatives, capables de se déplacer dans un plan horizontal, destinées à recevoir les deux autres éoliennes,
(e) dans lequel les plates-formes rotatives sont disposées symétriquement le long des côtés de la partie arrière du navire, l'une à gauche et l'autre à droite, une extrémité de chaque plate-forme rotative étant articulée à la coque du navire et l'autre extrémité supportant la base d'un mât d'éolienne,
(f) les mâts des trois éoliennes étant montés de manière à pouvoir être levés et abaissés et étant couplés à leurs plates-formes respectives par des articulations à charnière,
(g) chaque mât étant muni de son propre mécanisme de levage et d'abaissement, et chaque plate-forme rotative étant munie de son propre mécanisme de déplacement dans un plan horizontal.
